Europäisches Patentamt

(19) European Patent Office

Office européen des brevets

(11) EP 0 592 050 B1

(12) **EUROPEAN PATENT SPECIFICATION**

(45) Date of publication and mention
of the grant of the patent:
**10.04.1996 Bulletin 1996/15**

(51) Int. Cl.⁶: **B01J 37/00**, B01J 29/06,
C10G 49/08

(21) Application number: 93202845.9

(22) Date of filing: 06.10.1993

(54) **Process for extruding crystalline aluminosilicates**

Extrusionsverfahren für kristalline Aluminosilikate

Procédé d'extrusion d'aluminosilicate crystallins

(84) Designated Contracting States:
**BE CH DE DK ES FR GB IT LI NL SE**

(30) Priority: **08.10.1992 EP 92203110**

(43) Date of publication of application:
**13.04.1994 Bulletin 1994/15**

(73) Proprietor: **SHELL INTERNATIONALE
RESEARCH
MAATSCHAPPIJ B.V.
NL-2596 HR Den Haag (NL)**

(72) Inventors:
• **Klazinga, Aan Hendrik
NL-1031 CM, Amsterdam (NL)**
• **Daamen, Jacobus Theodorus
NL-1031 CM Amsterdam (NL)**
• **Boon, Andries Quirin Maria
NL-1031 CM Amsterdam (NL)**

(56) References cited:
EP-A- 0 403 966          EP-A- 0 494 470
DD-A- 203 068          US-A- 4 822 762

## Description

The present invention relates to a process for preparing a shapable dough comprising a silica source and a dealuminated aluminosilicate zeolite, to a process for preparing extrudates which comprises extruding such shapable doughs, to catalysts prepared from such extrudates and to a hydrocarbon conversion process with the help of such catalysts.

It is well known in the art that aluminosilicate zeolites can be composited with a matrix or a binder material in order to obtain a zeolite-containing material which is relatively strong. Alumina is a well-known and cheap binder material and is often used in commercially developed zeolite systems. It appears, as acknowledged in US patent specification 3,867,279, that it is much more difficult to use silica as binder for aluminosilicate zeolites.

Nevertheless, much work is being carried out on the use of such binder as it is generally expected that with such catalyst less side reactions take place.

The problem in the preparation of silica extrudates resides in the extrudability of the mixture. Often the mixture comprising silica and an aluminosilicate cannot be extruded, i.e. it cannot be forced through a die to be shaped into a rod, or the extrudates which are obtained are not strong enough for use in a commercial process. The principles underlying these problems are not yet understood.

Several mixtures comprising an aluminosilicate and silica are known to be extrudable, such as the mixture described in DDR patent specification 203 068. In this document it is described that a zeolite containing, silica bound hydrocracking catalyst having a specific pore size distribution can be prepared by extruding a mixture comprising 5 to 10% by weight of silica in the form of kieselsol containing less than 0.25% by weight of alkalioxides, and 1 to 10% by weight of organic plasticizers, which kieselsol has been brought to a pH of between 2.0 and 2.5 by means of nitric acid or hydrochloric acid.

It has been found in the course of research leading to the present invention that especially the extrusion of dealuminated aluminosilicate zeolites, which have a silica to alumina molar ratio of more than 20, is very difficult. An acidic mixture comprising dealuminated zeolite Y and silica as a binder in which mixture less than 15% by weight of silica was present, was found to give extrudates which disintegrated under manual contact.

In European patent specification 494470 a possible route for extrusion of dealuminated aluminosilicate has been given. It is described therein that a mixture comprising a dealuminated zeolite can be extruded if a trialkanolamine is present containing at least two carbon atoms per alkanolamine moiety. It should be observed that due to the basic pH of the mixture, the dealuminated zeolite might lose some initial crystallinity.

Surprisingly, it has now been found that an acidic mixture comprising dealuminated aluminosilicate zeolite can be extruded, namely if the mixture is kept at a pH of between 2.5 and 5.0 and if it comprises between 15 and 80% by weight of silica. An important advantage of extruding such acidic mixture over extruding an alkaline mixture is the fact that the zeolite is much less inclined to dissolve in such acidic environment.

The present invention relates to a process for preparing a shapable dough which comprises mixing and kneading a silica source, a dealuminated aluminosilicate zeolite having a silica to alumina molar ratio of more than 20 and water, which mixture is kept at a pH of between 2.5 and 5.0 and comprises between 15 and 80% by weight of silica, based on total amount of solids present.

Further, the present invention relates to a process for preparing extrudates which process comprises extruding such shapable dough.

If the pH of the mixture is not kept acidic, the mixture is difficult to extrude, the extrudates which are obtained are relatively weak and/or the performance of the catalyst derived from the extrudates is less good. If the pH of the mixture is maintained between 2.5 and 5.0, the silica sol tends to be more stable. This makes it less likely that problems will occur. Therefore, it is advantageous to carry out the process at a pH of the mixture of between 2.5 and 5.0, preferably between 3.0 and 4.5, more preferably between 3.2 and 3.9. It has been found that at these preferred pH ranges, extrudates are obtained of good side crushing strength and bulk crushing strength at such rate of throughput through the extruder that the production process is commercially attractive.

To bring the pH of the mixture on the desired value, in principle any compound can be used. Preferably, compounds are used which do not negatively influence the properties of the extrudate or catalyst obtained from the mixture. Compounds which can typically be used are nitric acid and acetic acid.

The amount of silica present in the mixture has a pronounced effect. The amount of dry silica present in the mixture is between 15 and 80% by weight of silica, based on amount of dry silica on total amount of solids present in the mixture. This amount of silica is exclusive any silicon moieties of the aluminosilicate. With solids is meant the material which remains after heating in air to 500 °C and maintaining this temperature for 2 hours. If the amount is below this range, the extrudates which are obtained will be too weak for commercial application and/or the dough will be difficult to extrude. If there is more than 80% by weight of silica present, the amount of zeolite which is present in the catalyst prepared from the dough is so low that for most applications the activity of the catalyst is not commercially attractive. Preferably, the amount of dry silica is of from 20 to 75% by weight.

Although the silica source influences the catalytic properties of the extrudate, any source of silica can in principle be used. Typically, the silica source comprises silica in a colloidal form and/or dry silica powder. Silica in a colloidal form is a very suitable silica source. However, if silica in a colloidal form is the only silica source, a large amount of water is generally introduced into the mixture. This can lead to difficulties when extruding the dough. Therefore, preferably the silica source comprises silica in a colloidal form and dry silica powder. In general, it is advantageous if between 40 and 95% of the silica present in the mixture, based on amount of dry silica, is added in the form of colloidal silica.

Dealuminated aluminosilicate zeolites which are incorporated in extrudates using the process according to the present invention, are defined for the purpose of this invention as aluminosilicate zeolites having silica to alumina molar ratio of more than 20. More typically, such dealuminated zeolites have a silica to alumina molar ratio of more than 30. The amount of dealuminated aluminosilicate present in the mixture preferably is between 20 and 85% by weight, based on amount of zeolite on total amount of solids present in the mixture, more preferably between 25 and 80% by weight.

Preferably, zeolites are used having an average pore diameter of at least 0.65 nm (6.5 Å), more preferably at least 0.7 nm (7 Å), even more preferably more than 0.72 nm (7.2 Å). Dealuminated forms of zeolite Y, ferrierite, zeolite beta and ZSM-5 are of particular interest since they find application in many (hydro)conversion processes. Preferably, dealuminated zeolite Y is used as this can serve as basis for an especially good hydrogenation catalyst.

The amount of water which is present in the shapable dough according to the present invention can vary widely. Suitable amounts are between 25 and 75% by weight, based on amount of shapable dough, preferably between 40 and 75% by weight, in order to obtain a smoothly extrudable shapable dough.

Examples of dealumination techniques comprise inter alia the use of acid extraction, the use of silicon halides or other suitable chemical treating agents, chelates as well as the use of chlorine of chlorine-containing gases at high temperatures. Good results have been obtained using materials which have been subjected to one or more acid-leaching procedures. However, other techniques can be applied as well.

To improve the flux properties in the extruder the mixture may also comprise a polyelectrolyte flocculating agent, such as Nalco 7879 (obtainable from Nalco) and Superfloc (obtainable from American Cyanamid). The mixture with or without electrolyte, can be readily extruded with for example a 7.7 cm (2¼ inch) Bonnot extruder. Cylindrical extrudates can suitably be prepared. Other shapes can be prepared as well, such as trilobes and quadrulobes.

Further, it is advantageous to have small amounts of inorganic extrusion aids present in the mixture. It has been found that if an inorganic extrusion aid is present, extrudates of good strength can be obtained at a pH as low as 2.1. Further, it has been found that the extrudates produced from a mixture containing an inorganic extrusion aid, have very good bulk crushing strengths. A typical amount would be between 0 and 10% by dry weight, based amount of dry inorganic extrusion aid on amount of solids present in the mixture, preferably between 0.1 and 10%, more preferably between 0.2 and 5%. Typical inorganic extrusion aids which can be applied are titania, zirconia, clay and alumina. In the present case, silica is not considered to be an inorganic extrusion aid. A clay which would be suitable is Laponite obtainable from Laporte.

It is possible to admix prior to extrusion small amounts of one or more inorganic salts to the shapable dough to be extruded. The incorporation of such inorganic salts is particularly useful when such salts impart (additional) catalytic activity to the system containing such salts.

Mixing and kneading of the mixture of silica source, dealuminated aluminosilicate zeolite and water, gives the shapable dough. The mixing and kneading can be carried out in any well known way, such as with the help of a Simpson mix muller.

It is advantageous to wash the extrudates obtained before the impregnation step. The washing can be carried out before or after calcination. It is preferred to wash after calcination. The liquid used can be water or water containing small amounts of electrolytes such as ammonium nitrate, acetic acid or derivates thereof. An especially advantageous washing process has been described in European patent application No. 0, 500, 176.

The extrudates prepared according to the present invention can typically be applied as adsorbents, catalyst carriers or catalysts. If used as catalyst carriers, the catalytic activity can be secured by the presence of one or more metals and/or metal compounds from Group VI and/or Group VIII of the Periodic Table of the Elements.

The choice of the metal compound depends primarily on the envisaged duty of the catalysts.

In order to be suitable for use as adsorbents, catalysts or catalyst carriers, the extrudates will normally be subjected to a drying treatment to remove solvent still present. Typical drying temperatures range from ambient temperature to about 200 °C, preferably between 50 and 125 °C. If desired, the extrudates may be calcined at a temperature range of between 300 °C and 1000 °C, preferably between 400 and 850 °C.

The metal(s) (compound(s)) to be present in the catalysts based on the extrudates produced in accordance with the process of present invention can be incorporated into the extrudates by methods known in the art such as impregnation or ion-exchange techniques. Both wet and dry impregnation techniques can be applied.

Typically, extrudates prepared according to the present invention can be used as catalysts in a hydrocarbon conversion process comprising contacting a hydrocarbon oil at elevated temperature and pressure and optionally in the presence of hydrogen, with a catalyst prepared as described above. Such processes can involve hydrogenation, dehydrogenation, hydrocracking, isomerisation, polymerisation, reforming and catalytic cracking. Particular good results have been obtained in hydrogenation and hydrocracking processes. A suitable hydrogenation process comprises contacting a hydrocarbon oil at a temperature between 150 and 400 °C and a hydrogen partial pressure between 10 and 150 bar with a catalyst prepared as described hereinabove.

When the extrudates prepared according to the present invention are to be used in hydrogenation processes they typically contain at least one metal or metal compound of Group VIII, suitably nickel, cobalt, ruthenium, rhodium, palladium, osmium, iridium and platinum. Particularly preferred are catalysts which have been obtained by impregnation with one or more platinum and/or palladium compounds, preferably when used together. Good hydrogenation catalysts are obtained by impregnating the extrudates prepared according to the present invention with platinum tetra-ammine ions and/or palladium tetra-ammine ions, and drying and calcining the impregnated extrudates at a temperature of up to 300° before reduction with hydrogen.

Other preferred further treatments and applications for the shapable dough and extrudates prepared according to the present invention have been described in European patent specification 494470.

The present invention is illustrated by the following examples.

EXAMPLE 1

A mixture was prepared having the following composition:

| | dry weight (g) | wet weight (g) |
|---|---|---|
| dealuminated zeolite Y (silica/alumina molar ratio 40) | 100 | 113.9 |
| silica sol (sol ex Ludox) | 25.0 | 62.5 |
| acetic acid (present in sol) | | 6.3 |
| flocculating agent (Nalco 7879) | | 2.5 |
| water | | 59.8 |
| | 125 | 245 |

The zeolite as described above was mixed with the silica sol. After 10 minutes the water was added and the mixture was kneaded. The flocculating agent was added after roughly half an hour, and after 5 more minutes the dough which had been obtained was extruded with the help of a 2.54 cm (1 inch) Bonnot extruder. Extrusion was easy. The extrudates obtained were dried for 2 hours at 120 °C and subsequently calcined for 2 hours at 600 °C in air. The pH of the dough before extrusion was 3.2.

The dried and calcined extrudates obtained had a bulk crushing strength of 0.92 MPa.

EXAMPLE 2

A mixture was prepared having the following composition:

| | dry weight (g) | wet weight (g) |
|---|---|---|
| dealuminated zeolite Y (silica/alumina molar ratio 80) | 1350 | 1541 |
| silica sol (sol 1034A ex Nalco, pH of 3.5) | 660 | 1941 |
| dry silica powder (Sipernat 22 ex Degussa) | 158 | 172 |
| clay (Laponite RD ex Laporte) | 42 | 45 |
| flocculating agent (Superfloc A 1839) | | 40 |
| flocculating agent (Nalco 7879) | | 40 |
| water | | 100 |
| | 2210 | 3879 |

The zeolite, silica sol, dry silica powder, clay, flocculating agents and water were mixed. The mixture obtained was extruded with the help of a 7.7 cm (2¼ inch) Bonnot extruder. The extrusion was easy. The throughput was 26 kg/hr.

The extrudates obtained were dried for 2 hours at 120 °C and subsequently calcined for 2 hours at 600 °C in air. The pH of the mixture before extrusion was 3.9.

The dried and calcined extrudates obtained had a bulk crushing strength of 0.97 MPa.

## Claims

1. Process for preparing a shapable dough which comprises mixing and kneading a silica source, a dealuminated aluminosilicate zeolite having a silica to alumina molar ratio of more than 20 and water, which mixture is kept at a pH of between 2.5 and 5.0 and comprises between 15 and 80% by weight of silica, based on total amount of solids present.

2. Process according to claim 1, in which the mixture is kept at a pH of between 3.0 and 4.5.

3. Process according to claim 1 and/or 2, in which the mixture further comprises between 0 and 10% by weight of inorganic extrusion aid, based on total amount of solids present.

4. Process according to claim 3, in which the mixture comprises between 0.1 and 10 % by weight of inorganic extrusion aid.

5. Process according to claim 3 and/or 4, in which the inorganic extrusion aid is clay and/or alumina.

6. Process according to any one of the preceding claims, in which the mixture comprises between 20 and 75% by weight of silica, based on amount of dry silica on total amount of solids present in the mixture.

7. Process according to any one of the preceding claims, in which the silica source comprises silica in a colloidal form and/or dry silica powder.

8. Process according to claim 7, in which the silica source comprises silica in a colloidal form and dry silica powder.

9. Process according to claim 8, in which between 40 and 95% of the silica present in the mixture, based on amount of silica, is added in the form of colloidal silica.

10. Process according to any one of the preceding claims, in which the dealuminated aluminosilicate zeolite has an average pore diameter of at least 0.65 nm (6.5 Å).

11. Process according to claim 10, in which the dealuminated aluminosilicate is dealuminated zeolite Y.

12. Process for preparing extrudates, which process comprises extruding a shapable dough prepared as described in any one of claims 1-11.

## Patentansprüche

1. Verfahren zur Herstellung einer Formmasse, bei dem man eine Siliciumdioxidquelle, einen dealuminierten Aluminosilicat-Zeolithen mit einem Molverhältnis von Siliciumdioxid zu Aluminiumoxid größer 20 und Wasser vermischt und verknetet, wobei man den pH-Wert der Mischung bei 2,5 bis 5,0 hält und eine Mischung mit 15 bis 80 Gew.-% Siliciumdioxid, bezogen auf die Gesamtmenge an vorhandenen Feststoffen, einsetzt.

2. Verfahren nach Anspruch 1, bei dem man den pH-Wert der Mischung bei 3,0 bis 4,5 hält.

3. Verfahren nach Anspruch 1 und/oder 2, bei dem man eine zusätzlich 0 bis 10 Gew.-% eines anorganischen Extrudierhilfsmittels, bezogen auf die Gesamtmenge an vorhandenen Feststoffen, enthaltende Mischung einsetzt.

4. Verfahren nach Anspruch 3, bei dem man eine 0,1 bis 10 Gew.-% eines anorganischen Extrudierhilfsmittels bezogen auf die Gesamtmenge an vorhandenen Feststoffen, enthaltende Mischung einsetzt.

5. Verfahren nach Anspruch 3 und/oder 4, bei dem man als anorganisches Extrudierhilfsmittel Ton und/oder Aluminiumoxid verwendet.

6. Verfahren nach einem der vorhergehenden Ansprüche, bei dem man eine 20 bis 75 Gew.-% Siliciumdioxid, basierend auf dem Anteil an trockenem Silicumdioxid an der Gesamtmenge der in der Mischung vorhandenen Feststoffe, enthaltende Mischung einsetzt.

7. Verfahren nach einem der vorhergehenden Ansprüche, bei dem man als Siliciumdioxidquelle Siliciumdioxid in kolloidaler Form und/oder trockenes Siliciumdioxid-Pulver einsetzt.

8. Verfahren nach Anspruch 7, bei dem man als Siliciumdioxidquelle Siliciumdioxid in kolloidaler Form und trockenes Siliciumdioxid-Pulver einsetzt.

9. Verfahren nach Anspruch 8, bei dem man 40 bis 95% des in der Mischung vorhandenen Siliciumdioxids, bezogen auf die Menge an Siliciumdioxid, in Form von kolloidalem Siliciumdioxid zugibt.

10. Verfahren nach einem der vorhergehenden Ansprüche, bei dem der dealuminierte Aluminosilicat-Zeolith einen mittleren Porendurchmesser von mindestens 0,65 nm (6,5 Å) aufweist.

11. Verfahren nach Anspruch 10, bei dem es sich bei dem dealuminierten Aluminosilicat um einen dealuminierten Zeolithen vom Typ Y handelt.

12. Verfahren zur Herstellung von Extrudaten, bei dem man eine wie in einem der Ansprüche 1-11 hergestellte Formmasse extrudiert.

## Revendications

1. Procédé de préparation d'une pâte pouvant être façonnée, caractérisé en ce que l'on mélange et malaxe une source de silice, une zéolite d'aluminosilicate désaluminisée, possédant un rapport molaire silice à alumine supérieur à 20 et de l'eau, lequel mélange est maintenu à un pH compris entre 2,5 et 5,0 et comprend de 15 à 80% en poids de silice, sur base de la quantité totale des solides présents.

2. Procédé suivant la revendication 1, caractérisé en ce que l'on maintient le mélange à un pH compris entre 3,0 et 4,5.

3. Procédé suivant l'une quelconque des revendications 1 et/ou 2, caractérisé en ce que le mélange comprend, en outre, de 0 à 10% en poids d'un adjuvant d'extrusion inorganique, sur base de la quantité totale des solides présents.

4. Procédé suivant la revendication 3, caractérisé en ce que le mélange comprend 0,1 à 10% en poids d'un adjuvant d'extrusion inorganique.

5. Procédé suivant l'une quelconque des revendications 3 et/ou 4, caractérisé en ce que l'adjuvant d'extrusion inorganique est de l'argile et/ou de l'alumine.

6. Procédé suivant l'une quelconque des revendications précédentes, caractérisé en ce que le mélange comprend de 20 à 75% en poids de silice, sur base de la quantité de silice sèche par rapport à la quantité totale de solides présents dans le mélange.

7. Procédé suivant l'une quelconque des revendications précédentes, caractérisé en ce que la source de silice comprend de la silice sous une forme colloïdale et/ou de poudre de silice sèche.

8. Procédé suivant la revendication 7, caractérisé en ce que la source de silice comprend de la silice sous forme colloïdale et de la poudre de silice sèche.

9. Procédé suivant la revendication 8, caractérisé en ce qu'entre 40 et 95% de la silice présente dans le mélange, sur base de la quantité de silice, sont ajoutés sous la forme de silice colloïdale.

10. Procédé suivant l'une quelconque des revendications précédentes, caractérisé en ce que la zéolite d'aluminosilicate désaluminisée possède un diamètre moyen des pores d'au moins 0,65 nm (6,5 Å).

11. Procédé suivant la revendication 10, caractérisé en ce que l'aluminosilicate désaluminisé est une zéolite Y désaluminisée.

12. Procédé de préparation d'extrudats, caractérisé en ce que l'on extrude une pâte façonnable préparée de la manière décrite dans l'une quelconque des revendications 1 à 11.